# FASCICULE DE BREVET EUROPEEN

(11) **EP 1 144 206 B1**
(45) Date de publication et mention de la délivrance du brevet: **19.03.2003**
(21) Numéro de dépôt: 99965580.6
(22) Date de dépôt: 30.12.1999
(51) Int. Cl.: B60C 15/024, B60C 15/00, B60C 15/02, B60C 15/05

(54) **PNEUMATIQUE AVEC DES BOURRELETS DE STRUCTURE AMELIOREE**
REIFEN MIT VERBESSERTER WULSTSTRUKTUR
TYRE WITH BEADS HAVING IMPROVED STRUCTURE

(30) Priorité: 13.01.1999 FR 9900307
(43) Date de publication de la demande: 17.10.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: CHANDEZON, Pierre, F-63100 Clermont-Ferrand (FR); EYNARD, Claude, F-63530 Chanat la Mouteyre (FR); MUHLHOFF, Olivier, F-63100 Clermont-Ferrand (FR); DRIEUX, Jean-Jacques, F-63530 Volvic (FR)
(74) Mandataire: Diernaz, Christian
(86) Numéro de dépôt international: EP9910472
(87) Numéro de publication internationale: WO00041902

(56) Documents cités:
- WO-A-94/13498
- WO-A-95/23073

## Description

La présente invention concerne un pneumatique destiné à être monté sur une jante ayant au moins un premier siège tronconique dont la génératrice a une extrémité axialement extérieure plus proche de l'axe de rotation que l'extrémité axialement intérieure.

Un tel pneumatique est décrit dans la demande WO 94/13498 de la demanderesse. Il comprend au moins un premier bourrelet, destiné à être monté sur ledit premier siège de jante incliné vers l'extérieur, ledit premier bourrelet, de largeur axiale usuelle et terminé axialement à l'extérieur par une pointe de bourrelet, ayant un siège de bourrelet dont la génératrice a son extrémité axialement extérieure plus proche de l'axe de rotation que son extrémité axialement intérieure, ladite génératrice étant prolongée axialement à l'extérieur par une face extérieure délimitant la pointe de bourrelet, ladite face faisant avec l'axe de rotation un angle γ, ouvert radialement et axialement vers l'extérieur, et inférieur à 90°. L'armature de carcasse radiale dudit pneumatique, ancrée dans chaque bourrelet à au moins un élément de renforcement annulaire inextensible, possède un profil méridien, lorsque le pneumatique est monté sur sa jante de service et gonflé à sa pression de service, avec un sens de courbure constant dans les flancs et bourrelet terminé par la pointe et qui est tel que, dans ledit bourrelet, la tangente au point de tangence dudit profil avec l'élément annulaire inextensible dudit bourrelet fait avec l'axe de rotation un angle ø ouvert vers l'extérieur d'au moins 70°.

Le bourrelet d'un tel pneumatique, et plus particulièrement la structure de l'accrochage de l'armature de carcasse peut être variable. Dans la demande internationale WO 95/23073, correspondant au préambule de la revendication 1, l'armature de carcasse radiale est ancrée à l'élément inextensible par enroulement autour dudit élément en allant du talon à la pointe du bourrelet pour former un retournement s'étendant dans un profilé de mélange caoutchouteux sous forme de coin délimité par deux côtés issus d'un sommet A localisé sous la section de la tringle enrobée, le côté radialement externe faisant, avec une parallèle avec l'axe de rotation passant par ledit sommet A, un angle ø₁ aigu, ouvert radialement et axialement vers l'extérieur et compris entre 20° et 70°, et le côté radialement interne faisant avec ladite parallèle un angle ø₂ aigu, ouvert radialement vers l'intérieur et compris entre 0° et 30°, et le mélange caoutchouteux formant le profilé, axialement adjacent à la tringle, ayant une dureté Shore A au moins égale à 65 et supérieure à la (aux) dureté(s) Shore A des mélanges caoutchouteux axialement et radialement au dessus de la tringle et du profilé.

La combinaison du profil méridien d'armature de carcasse tel que décrit dans la première demande internationale citée avec une structure d'accrochage telle que décrite dans la deuxième demande internationale citée permet l'obtention d'un très bon compromis d'une part entre les propriétés de comportement sur route du pneumatique gonflé à sa pression recommandée, d'autre part entre lesdites propriétés lorsqu'il est gonflé à pression réduite voire nulle, les bourrelets dudit pneumatique restant parfaitement en place lors d'un roulage en mode dégradé grâce à leur structure décrite ci-dessus, structure qui permet une modification (accroissement) du serrage de la pointe de bourrelet sur la jante de montage en fonction de la tension de l'armature de carcasse, ce qui autorise à avoir un serrage sur jante initial de faible valeur sachant que ledit serrage augmentera lorsque le pneumatique sera gonflé à sa pression recommandée.

La solution préférentielle décrite dans le document WO 95/23073 est telle que le retournement d'armature de carcasse a une longueur telle qu'il est en contact avec le périmètre total du profilé ou coin ; il forme ainsi les deux côtés radialement externe et interne du profilé de caoutchouc ainsi que le côté opposé au sommet ou centre dudit profilé, et son extrémité est située axialement au delà du point d'intersection des deux côtés externe et interne. La partie du retournement immédiatement adjacente à la partie enroulée autour de la tringle, peut former en premier lieu le côté radialement externe du profilé ou coin puis ensuite le côté opposé au sommet dudit profilé, puis en dernier lieu le côté radialement interne dudit profilé pour se terminer au delà du point de jonction des deux côtés externe et interne. Elle peut aussi former d'abord le côté radialement interne du profilé ou coin, puis le côté opposé au sommet dudit profilé, puis en dernier lieu le côté radialement externe dudit profilé pour se terminer de la même manière que précédemment.

Les deux structures ci-dessus sont compliquées et difficiles à mettre en oeuvre industriellement, et donc coûteuses. Par ailleurs, dans des conditions extrêmement sévères de charge, la pression exercée par la pointe du bourrelet sur la saillie axialement extérieure de jante et la température élevée que peut atteindre ledit bourrelet sont telles qu'il peut se produire, en fin de durée de vie, des fissures du caoutchouc de la couche extérieure protectrice du bourrelet, fissures qui se propagent le long du retournement pour atteindre la face radialement interne de la tringle d'ancrage avec destruction dudit bourrelet.

L'invention a pour but de remédier aux dits inconvénients ci-dessus tout en conservant les excellentes propriétés d'anti-décoincement ou anti-déjantage du pneumatique considéré.

Le pneumatique à armature de carcasse radiale ,conforme à l'invention, comprend, vu en section méridienne, au moins un premier bourrelet, dont le siège a une génératrice dont l'extrémité axialement intérieure est sur un cercle de diamètre supérieur au diamètre du cercle sur lequel se trouve l'extrémité axialement extérieure, le talon de bourrelet étant axialement à l'intérieur et étant renforcé par au moins un élément de renforcement, annulaire, inextensible et enrobé de mélange caoutchouteux, alors que la pointe de bourrelet est axialement à l'extérieur et comprend un profilé de mélange caoutchouteux sous forme de coin délimité par deux côtés issus d'un sommet A localisé sous la section de l'élément annulaire, le côté radialement externe faisant, avec une parallèle avec l'axe de rotation passant par ledit sommet A, un angle ø₁ aigu, ouvert radialement et axialement vers l'extérieur, et le côté radialement interne faisant avec ladite parallèle un angle ø₂ aigu, ouvert radialement vers l'intérieur, le mélange caoutchouteux formant le profilé axialement adjacent à l'élément annulaire, ayant une dureté Shore A supérieure à la (aux) dureté(s) Shore A des mélanges caoutchouteux respectivement radialement au dessus du dit élément annulaire et du profilé axialement adjacent. L'armature de carcasse radiale dudit pneumatique s'enroule au moins dans le premier bourrelet autour dudit élément annulaire en allant de l'intérieur à l'extérieur pour former un retournement, dont l'extrémité est localisée axialement à l'extérieur d'une droite P₂ perpendiculaire à l'axe de rotation et passant par le centre de gravité de la section méridienne de l'élément annulaire et le pneumatique est caractérisé en ce que l'extrémité du retournement d'armature de carcasse est localisée axialement à l'intérieur et radialement à l'extérieur de la droite P₁ supportant le côté radialement externe du profilé axialement adjacent audit élément annulaire.

L'accroissement du serrage de la pointe de bourrelet sur la jante de montage, en fonction de la tension de l'armature de carcasse, sera plus élevé si le profilé de mélange caoutchouteux sous forme de coin et délimité par les deux côtés issus du sommet A est renforcé par au moins la partie du retournement d 'armature de carcasse immédiatement adjacente à la partie d'armature de carcasse enroulée autour de l'élément annulaire de renforcement de bourrelet, que ladite partie soit dans le profilé ou qu'elle forme au moins un de ses côtés.

De manière avantageuse, l'armature de carcasse radiale dudit pneumatique s'enroule, au moins dans le premier bourrelet, autour dudit élément annulaire en allant de l'intérieur à l'extérieur pour former un retournement, en s'étendant le long du côté radialement intérieur du profilé en forme de coin, puis le long du côté opposé au sommet A pour ensuite recouvrir axialement et radialement à l'extérieur au moins partiellement le profilé radialement au-dessus du profilé en forme de coin.

De manière préférentielle, le pneumatique comprend un deuxième bourrelet dont le siège présente la même configuration que le siège du premier bourrelet, c'est-à-dire un siège dont la génératrice possède une extrémité axialement intérieure sur un cercle de diamètre supérieur au diamètre du cercle sur lequel se trouve l'extrémité axialement extérieure, ou siège dit incliné vers l'extérieur.

De même, si l'on appelle diamètre d'un siège incliné le diamètre du cercle sur lequel se trouve l'extrémité de sa génératrice la plus éloignée de l'axe de rotation, le pneumatique a de façon avantageuse deux sièges dits inclinés vers l'extérieur et de diamètres différents.

Le profil méridien de l'armature de carcasse, lorsque le pneumatique est monté sur sa jante de service et gonflé à sa pression de service, a un sens de courbure constant au moins dans le premier bourrelet et le flanc qui le prolonge radialement, et la tangente TT' au point de tangence T dudit profil avec l'élément annulaire de renforcement dudit bourrelet fait avec l'axe de rotation un angle ø ouvert vers l'extérieur au moins égal à 70°.

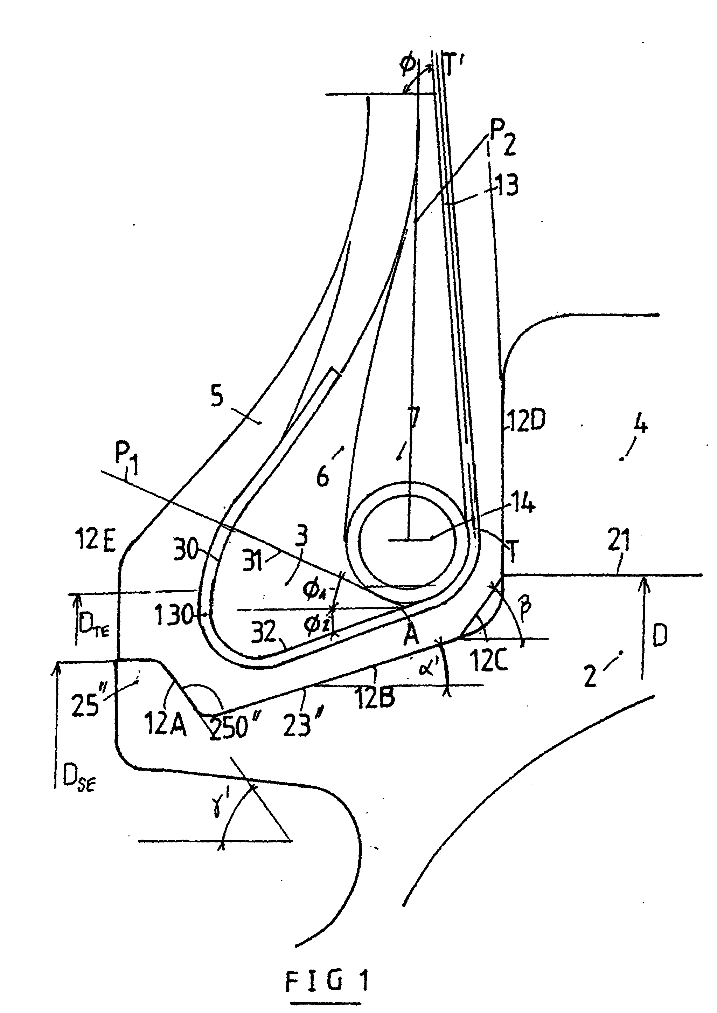

L'invention sera mieux comprise à l'aide du dessin annexé à la description, illustrant un exemple non limitatif d'exécution d'un pneumatique conforme à l'invention, et qui, associé à une jante adaptée, forme un ensemble pneumatique-jante performant. Sur ledit dessin, la figure unique 1 représente schématiquement un bourrelet de pneumatique conforme à l'invention, monté sur le siège de sa jante de montage.

La jante (2), sur laquelle sera monté le pneumatique (1), est formée principalement de deux sièges tronconiques dont les génératrices font avec l'axe de rotation un angle α', ouvert vers l'intérieur du pneumatique, compris entre 4° et 30° et dans l'exemple décrit égal à 14°, inférieur à l'angle des génératrices correspondantes des sièges des bourrelets (12) du pneumatique. Lesdits sièges ont ainsi des extrémités axialement extérieures sur des cercles de plus petits diamètres que ceux des cercles sur lesquels se trouvent les extrémités axialement intérieures. Le siège (23"), situé par exemple du côté extérieur du véhicule, est prolongé axialement à l'extérieur par une saillie ou hump (25") dont la face intérieure (250") fait avec l'axe de rotation un angle γ', dont le diamètre D_{SE} est inférieur au diamètre intérieur D_{TE} de la tringle (14) de renforcement du bourrelet destiné à être monté sur ledit siège ,et dont la hauteur h₁, mesurée par rapport à l'extrémité axialement extérieure du siège de jante (23") est une hauteur comparable à la hauteur des humps ou saillies utilisés axialement à l'intérieur des jantes de tourisme usuelles et normalisées.

Sur le côté situé à l'extérieur du véhicule, le siège de jante (23") est relié à une portion cylindrique (21), sur laquelle viendra reposer un appui de soutien (4) de bande de roulement. Le diamètre de la portion cylindrique (21) est le diamètre nominal D de la jante (2).

Le contour du bourrelet (12), monté sur le siège (23"), comprend, axialement à l'intérieur, une paroi (12D) sensiblement perpendiculaire à l'axe de rotation, paroi qui prendra appui latéralement sur la face axialement extérieure de l'anneau de soutien (4). Ladite paroi (12D) du bourrelet (12) est prolongée axialement à l'extérieur par une génératrice tronconique (12C), faisant avec une parallèle à l'axe de rotation un angle β de 45° ouvert axialement vers l'intérieur et radialement vers l'extérieur. Ladite génératrice (12C) est elle-même prolongée axialement à l'extérieur par une seconde génératrice tronconique (12B) de siège de bourrelet faisant avec la direction de l'axe de rotation un angle α égal à 15°, ouvert axialement vers l'intérieur et radialement vers l'extérieur. Ladite génératrice (12B) est dite inclinée vers l'extérieur, son extrémité axialement extérieure étant sur un cercle de diamètre inférieur au diamètre du cercle sur lequel se trouve son extrémité axialement intérieure. Une génératrice tronconique (12A), prolongeant axialement à l'extérieur la génératrice (12B) et faisant avec la direction de l'axe de rotation un angle γ égal à 45°, ouvert axialement et radialement vers l'extérieur, complète le contour de la base du bourrelet (12). La paroi (12E), courbe dans l'exemple décrit et d'orientation générale sensiblement perpendiculaire à la direction de l'axe de rotation de la jante, complète le contour du bourrelet (12). Alors que la génératrice (12B) prendra appui sur le siège de jante (23"), incliné vers l'extérieur, la génératrice (12A) prendra appui sur la paroi axialement intérieure (250") de la saillie ou hump (25") de la jante (2), inclinée de l'angle γ', égal à l'angle γ de la génératrice (12A). La portion de bourrelet, adjacente à la paroi (12D) et à la génératrice (12C), constitue, vue en section méridienne, le talon du bourrelet (12). La portion de bourrelet, adjacente à la génératrice (12B), à la génératrice (12A) et partiellement à la paroi (12E), constitue la pointe du bourrelet (12). Le talon du bourrelet (12) est renforcé par la tringle d'ancrage (14) d'armature de carcasse (13), tringle enrobée d'un mélange de caoutchouc à haute dureté Shore A.. La pointe du bourrelet (12) comprend un profilé (3), disposé axialement à l'extérieur de la tringle d'ancrage (14) de l'armature de carcasse (13). Ce profilé (3) se présente sous la forme d'un secteur sensiblement circulaire avec un sommet ou centre A situé radialement sous la tringle (14), deux côtés ou rayons (31) et (32) partant dudit sommet A, et un troisième côté (30), opposé au sommet A. Le côté ou rayon radialement extérieur (31) fait avec une parallèle à l'axe de rotation un angle ø₁, ouvert radialement et axialement vers l'extérieur, égal à 45°, alors que le côté ou rayon radialement intérieur (32) fait avec la même parallèle un angle ø₂, ouvert radialement vers l'intérieur et axialement vers l'extérieur, égal à 15°. Ce profilé (3) est fait d'un mélange caoutchouteux ayant dans l'état vulcanisé une dureté Shore A égale à 94.

La tringle (14) enrobée est surmontée radialement à l'extérieur d'un profilé (7) de mélange caoutchouteux de dureté Shore A égale à 37. Radialement à l'extérieur du profilé (3) et axialement à l'extérieur dudit profilé (7) est disposé un troisième profilé (6) en mélange caoutchouteux ayant une dureté Shore A égale à celle du profilé (7) et donc nettement inférieure à la dureté du mélange du profilé (3), ce qui permet, lors d'un accroissement de tension de l'armature de carcasse, de faciliter le déplacement axial de la tringle tressée (14) vers l'extérieur du bourrelet (12) et ainsi de créer une compression du profilé (3) et un auto-serrage de la pointe de bourrelet sur la jante (2) de montage, alors que, dans le cas décrit, le serrage initial du bourrelet (12) sur ladite jante est pratiquement nul, du fait de la quasi-égalité entre les angles α et α' et de la quasi-égalité entre les plus grands diamètres des sièges de jante et de bourrelets. Le bourrelet (12) est complété par le protecteur (5).

L'armature de carcasse (13) a un profil méridien, lorsque le pneumatique est monté sur sa jante de service et gonflé à sa pression de service, qui a un sens de courbure constant sur toute sa longueur, et est tel que les tangentes TT' aux points de tangence T dudit profil avec les tringles enrobées (14) des bourrelets (12) font avec l'axe de rotation des angles φ ouverts axialement et radialement vers l'extérieur et égaux à 80°. Ladite armature de carcasse (13) est enroulée autour de la tringle enrobée (14) en allant du talon à la pointe du bourrelet (12), ou de l'intérieur à l'extérieur , pour former un retournement (130), sensiblement rectiligne et qui s'étend le long du côté radialement intérieur (32) du profilé (3), puis le long du côté (30) opposé au sommet A pour ensuite recouvrir au moins partiellement le côté axialement et radialement extérieur du profilé (6) radialement à l'extérieur du profilé (3).

L'extrémité du retournement (130) est localisée, d'une part axialement à l'intérieur et radialement à l'extérieur d'une droite P₁, ladite droite P₁ étant la droite qui supporte le côté (31) du profilé (3), et d'autre part axialement à l'extérieur d'une droite P₂, qui est perpendiculaire à l'axe de rotation et passant par le centre de gravité de la section méridienne de la tringle enrobée(14). Le retournement d'armature de carcasse ainsi structuré présente ainsi une longueur suffisante pour pouvoir présenter une bonne tenue vis-à-vis du déroulement d'armature de carcasse, tout en permettant une vitesse de propagation moindre des fissures prenant naissance dans la couche extérieure (5) de bourrelet (12).

## Revendications

1. Pneumatique (1) à armature de carcasse radiale (13) comprenant, vu en section méridienne, au moins un premier bourrelet (12), dont le siège (12B) a une génératrice dont l'extrémité axialement intérieure est sur un cercle de diamètre supérieur au diamètre du cercle sur lequel se trouve l'extrémité axialement extérieure, le talon de bourrelet (12) étant axialement à l'intérieur et étant renforcé par au moins un élément de renforcement (14), annulaire, inextensible et enrobé de mélange caoutchouteux, alors que la pointe de bourrelet est axialement à l'extérieur et comprend un profilé (3) de mélange caoutchouteux sous forme de coin délimité par deux côtés (31, 32) issus d'un sommet A localisé sous la section de l'élément annulaire (14), le côté radialement externe (31) faisant, avec une parallèle avec l'axe de rotation passant par ledit sommet A, un angle ø₁ aigu, ouvert radialement et axialement vers l'extérieur, et le côté radialement interne (32) faisant avec ladite parallèle un angle ø₂ aigu, ouvert radialement vers l'intérieur, le mélange caoutchouteux formant le profilé (3), axialement adjacent à l'élément annulaire (14), ayant une dureté Shore A supérieure à la (aux) dureté(s) Shore A des mélanges caoutchouteux (7) et (6) respectivement radialement au dessus du dit élément (14) et du profilé axialement adjacent (3), l'armature de carcasse radiale (13) dudit pneumatique s'enroulant au moins dans le premier bourrelet (12) autour dudit élément annulaire (14) en allant de l'intérieur à l'extérieur pour former un retournement (130), dont l'extrémité est localisée axialement à l'extérieur d'une droite P₂ perpendiculaire à l'axe de rotation et passant par le centre de gravité de la section méridienne de l'élément (14), **caractérisé en ce que** ladite extrémité est aussi localisée axialement à l'intérieur et radialement à l'extérieur de la droite P₁ supportant le côté radialement externe (31) du profilé (3).

2. Pneumatique (1) selon la revendication 1, **caractérisé en ce que** le profilé (3) de mélange caoutchouteux, sous forme de coin et délimité par les deux côtés (31, 32) issus du sommet A, est renforcé par au moins la partie du retournement (130) d'armature de carcasse (13) immédiatement adjacente à la partie d'armature de carcasse (13) enroulée autour de l'élément annulaire (14) de renforcement de bourrelet, que ladite partie soit dans le profilé (3) ou qu'elle forme au moins un de ses côtés (31, 32, 30).

3. Pneumatique (1) selon la revendication 2, **caractérisé en ce que** l'armature de carcasse radiale (13) dudit pneumatique s'enroule au moins dans le premier bourrelet (12) autour dudit élément annulaire (14) en allant de l'intérieur à l'extérieur pour former un retournement (130), s'étendant le long du côté radialement intérieur (32) du profilé (3) en forme de coin, puis le long du côté opposé (30) au sommet A, pour ensuite recouvrir axialement et radialement à l'extérieur au moins partiellement le profilé (6) radialement au-dessus du profilé (3) en forme de coin.

4. Pneumatique (1) selon la revendication 1, **caractérisé en ce qu'**il comprend un deuxième bourrelet (12) dont le siège (12B) présente la même configuration que le siège (12B) du premier bourrelet (12), c'est-à-dire un siège dont la génératrice possède une extrémité axialement intérieure sur un cercle de diamètre supérieur au diamètre du cercle sur lequel se trouve l'extrémité axialement extérieure, ou siège dit incliné vers l'extérieur.

5. Pneumatique (1) selon la revendication 1, **caractérisé en ce qu'**il a deux sièges (12B) dits inclinés vers l'extérieur et de diamètres différents.

6. Pneumatique (1) selon la revendication 4, **caractérisé en ce que** les génératrices des sièges (12B) des bourrelets (12) sont axialement à l'extérieur prolongées par des génératrices tronconiques (12A), faisant avec la direction de l'axe de rotation un angle γ, ouvert axialement et radialement vers l'extérieur, égal à 45°.

7. Pneumatique (1) selon la revendication 1, **caractérisé en ce que** le profil méridien de l'armature de carcasse (13), lorsque le pneumatique est monté sur sa jante de service et gonflé à sa pression de service, a un sens de courbure constant dans les flanc et premier bourrelet et dont la tangente TT' au point de tangence T dudit profil avec l'élément annulaire de renforcement dudit bourrelet fait avec l'axe de rotation un angle ø ouvert vers l'extérieur au moins égal à 70°.

## Patentansprüche

1. Der Reifen (1) mit radialer Karkassenbewehrung (13) der, im Meridianschnitt gesehen, mindestens einen ersten Wulst (12) aufweist, dessen Sitz (12B) eine Erzeugende hat, deren axial inneres Ende auf einem Kreis mit einem Durchmesser liegt, der größer ist als der Durchmesser des Kreises, auf dem sich das axial äußere Ende befindet, wobei das hintere Ende des Wulstes (12) axial innen liegt und durch mindestens ein ringförmiges, undehnbares und mit Gummimischung umhülltes Verstärkungselement (14) verstärkt ist, während die Spitze des Wulstes axial außen liegt und ein Profil (3) aus Gummimischung in Form eines Keils aufweist, der durch zwei Seiten (31, 32) begrenzt ist, die von einem Scheitel A ausgehen, der unter dem Querschnitt des ringförmigen Elements (14) angeordnet ist, die radial äußere Seite (31) mit der Parallelen zur Drehachse, die durch den genannten Scheitel A hindurchgeht, einen spitzen Winkel Ø₁ bildet, der radial und axial nach außen offen ist, und die radial innere Seite (32) mit der genannten Parallelen einen spitzen Winkel Ø₂ bildet, der radial nach innen offen ist, die Gummimischung, die axial neben dem ringförmigen Element (14) das Profil (3) bildet, eine Shore-Härte A hat, die größer ist als die Shore-Härte(n) A der Gummimischungen (7) und (6) jeweils radial über dem genannten ringförmigen Element (14) und des axial danebenliegenden Profils (3) und die radiale Karkassenbewehrung (13) des genannten Reifens mindestens im ersten Wulst (12) rund um das genannte ringförmige Element (14) herumgeschlagen ist, von innen nach außen verlaufend, um einen Umschlag (130) zu bilden, dessen Ende axial auf der Außenseite einer Geraden P₂ liegt, die senkrecht zur Drehachse verläuft und durch den Schwerpunkt des Meridianschnitts der ringförmigen Elements (14) hindurchläuft, **dadurch gekennzeichnet, daß** das genannte Ende auch axial innerhalb und radial außerhalb der Geraden P₁ angeordnet ist und die radial äußere Seite (31) des Profils (3)abstützt.

2. Reifen (1) nach Anspruch 1, **dadurch gekennzeichnet, daß** das Profil (3) aus Gummimischung, in Form eines Keils und durch zwei Seiten (31, 32) begrenzt, die vom Scheitel A ausgehen, durch mindestens den Teil des Umschlags (130) der Karkassenbewehrung (13) verstärkt ist, der unmittelbar neben dem Teil der Karkassenbewehrung (13) liegt, der um das ringförmige Element (14) zur Verstärkung des Wulstes herumgeschlagen ist, und daß das genannte Teil im Profil (3) liegen soll oder daß es mindestens eines seiner Seiten (31, 32, 30) bildet.

3. Reifen (1) nach Anspruch 2, **dadurch gekennzeichnet, daß** die radiale Karkassenbewehrung (13) des genannten Reifens sich mindestens im ersten Wulst (12) um das genannte, ringförmige Element (14) herumlegt, indem sie von innen nach außen verläuft, um einen Umschlag (130) zu bilden, der sich längs der radial inneren Seite (32) des keilförmigen Profils (3) erstreckt, dann längs der Seite (30), die dem Scheitel A gegenüberliegt, um dann axial und radial auf der Außenseite mindestens teilweise das Profil (6) abzudecken, das sich radial über dem keilförmigen Profil (3) befindet.

4. Reifen (1) nach Anspruch 1, **dadurch gekennzeichnet, daß** er einen zweiten Wulst (12) aufweist, dessen Sitz (12B) dieselbe Ausbildung wie der Sitz (12B) des ersten Wulstes (12) aufweist, das heißt, ein Sitz, dessen Erzeugende ein axial inneres Ende auf einem Kreis mit einem Durchmesser aufweist, der größer ist als der Durchmesser des Kreises, auf dem sich das axial äußere Ende befindet, oder ein sogenannter nach außen geneigter Sitz.

5. Reifen (1) nach Anspruch 1, **dadurch gekennzeichnet, daß** er zwei sogenannte nach außen geneigte Sitze (12B) und mit unterschiedlichen Durchmessern aufweist.

6. Reifen (1) nach Anspruch 4, **dadurch gekennzeichnet, daß** die Erzeugenden der Sitze (12B) der Wülste (12) axial auf der Außenseite durch kegelstumpfförmige Erzeugende (12A) verlängert sind, die zur Richtung der Drehachse einen Winkel γ bilden, der axial und radial nach außen offen ist und 45° beträgt.

7. Reifen (1) nach Anspruch 1, **dadurch gekennzeichnet, daß** das Meridianprofil der Karkassenbewehrung (13), wenn der Reifen auf seiner Einsatzfelge montiert und auf seinen Betriebsdruck aufgepumpt ist, eine konstante Krümmungsrichtung in der Flanke und im ersten Wulst aufweist, und daß deren Tangente TT' an den Tangentenpunkt T des genannten Profils mit dem ringförmigen Verstärkungselement des genannten Wulstes zur Drehachse einen nach außen offenen Winkel Ø von mindestens 70° bildet.

## Claims

1. A tyre (1) having a radial carcass reinforcement (13) comprising, viewed' in meridian section, at least one first bead (12), the seat (12B) of which has a generatrix, the axially inner end of which lies on a circle of diameter greater than the diameter of the circle on which the axially outer end is located, the bead heel (12) being axially to the inside and being reinforced by at least one inextensible, annular reinforcement element (14) which is coated with rubber mix, whereas the bead toe is axially to the outside and comprises a profiled element (3) of rubber mix in the form of a wedge defined by two sides (31, 32) starting from an apex A located beneath the section of the annular element (14), the radially outer side (31) forming, with a line parallel to the axis of rotation passing through said apex A, an acute angle ø₁, which is open radially and axially towards the outside, and the radially inner side (32) forming with said parallel line an acute angle ø₂, which is open radially towards the inside, the rubber mix forming the profiled element (3), axially adjacent to the annular element (14), having a Shore A hardness greater than the Shore A hardness(es) of the rubber mixes (7) and (6) respectively radially above said element (14) and the axially adjacent profiled element (3), the radial carcass reinforcement (13) of said tyre winding at least in the first bead (12) around said annular element (14) from the inside to the outside to form an upturn (130), the end of which is located axially to the outside of a straight line P₂ perpendicular to the axis of rotation and passing through the centre of gravity of the meridian section of the element (14), **characterised in that** said end is also located axially to the inside and radially to the outside of the straight line P₁ supporting the radially outer side (31) of the profiled element (3).

2. Tyre (1) according to Claim 1, **characterised in that** the profiled element (3) of rubber mix in the form of a wedge and defined by the two sides (31, 32) starting from the apex A is reinforced by at least that part of the upturn (130) of the carcass reinforcement (13) which is immediately adjacent to that part of the carcass reinforcement (13) which is wound around the annular bead reinforcement element (14), whether said part be in the profiled element (3) or whether it forms at least one of its sides (31, 32, 30).

3. A tyre (1) according to Claim 2, **characterised in that** the radial carcass reinforcement (13) of said tyre is wound, at least in the first bead (12), around said annular element (14) from the inside to the outside to form an upturn (130), extending along the radially inner side (32) of the profiled element (3) in the form of a wedge, then along the side (30) opposite the apex A, then covering axially and radially to the outside at least in part the profiled element (6) radially above the profiled element (3) in the form of a wedge.

4. A tyre (1) according to Claim 1, **characterised in that** it comprises a second bead (12), the seat (12B) of which is of the same configuration as the seat (12B) of the first bead (12), that is to say, a seat, the generatrix of which has an axially inner end on a circle of diameter greater than the diameter of the circle on which the axially outer end is located, or seat which is said to be inclined towards the outside.

5. A tyre (1) according to Claim 1, **characterised in that** it has two seats (12B) said to be inclined towards the outside and of different diameters.

6. A tyre (1) according to Claim 4, **characterised in that** the generatrices of the seats (12B) of the beads (12) are extended axially to the outside by frustoconical generatrices (12A), forming with the direction of the axis of rotation an angle γ, which is open axially and radially towards the outside, of 45°.

7. A tyre (1) according to Claim 1, **characterised in that** the meridian profile of the carcass reinforcement (13), when the tyre is mounted on its operating rim and inflated to its operating pressure, has a direction of curvature which is constant in the sidewall and the first bead and the tangent TT' of which to the point of tangency T of said profile with the annular reinforcement element of said bead forms with the axis of rotation an angle ø which is open towards the outside of at least 70°.
